# FASCICULE DE BREVET EUROPEEN

(11) **EP 2 134 503 B1**
(45) Date de publication et mention de la délivrance du brevet: **26.09.2012**
(21) Numéro de dépôt: 08775673.0
(22) Date de dépôt: 04.03.2008
(51) Int. Cl.: B23K 37/04, B62D 25/06, B62D 65/02, B23K 26/02

(54) **DISPOSITIF ET PROCEDE DE MISE EN GEOMETRIE D'UN PAVILLON ET D'UN COTE DE CAISSE POUR VEHICULE AUTOMOBILE**
VERFAHREN UND VORRICHTUNG ZUR BESTIMMUNG DER GEOMETRIE DES DACHS UND DER KAROSSERIE EINES KRAFTFAHRZEUGS
METHOD AND DEVICE FOR DETERMINING THE GEOMETRY OF THE ROOF AND THE BODY SIDE OF AN AUTOMOBILE

(30) Priorité: 15.03.2007 FR 0753856
(43) Date de publication de la demande: 23.12.2009
(73) Titulaire: Renault SAS, 92100 Boulogne Billancourt (FR)
(72) Inventeur: DELARUE, Pascal, F-78540 Vernouillet (FR); GUERMEUR, Hervé, F-78250 Oinville-sur-Montcient (FR)
(86) Numéro de dépôt international: PCT/FR2008/050370
(87) Numéro de publication internationale: WO 2008/125773

(56) Documents cités:
- EP-A- 0 958 885
- DE-A1- 19 523 005
- DE-A1-102004 028 787
- DE-C1- 10 125 614
- JP-A- 8 090 264
- US-A- 5 324 913

## Description

### DOMAINE TECHNIQUE ET ART ANTÉRIEUR

La présente invention se rapporte à la fabrication de véhicules automobiles, et plus particulièrement à un procédé simplifié permettant de positionner dans une position donnée un côté de caisse et un pavillon.

Le pavillon d'un véhicule automobile correspond au toit et est fixé par brasage sur un côté de caisse, destiné à supporter des portières.

La précision de l'assemblage de ces pièces est importante pour l'esthétisme du véhicule. En outre un manque de précision peut aussi avoir des conséquences sur la qualité du brasage, en provoquant des trous, une porosité, voire un mauvais dépôt du fil de brasage.

Actuellement, afin d'assurer l'affleurement entre le pavillon et le côté de caisse, il est utilisé un dispositif très encombrant comportant une vingtaine de presseurs, destinés à appliquer une pression sur toute la surface du pavillon du côté extérieur de celui-ci, afin de disposer celui-ci dans une position souhaitée par rapport au côté de caisse.

Cependant, ce dispositif est d'une part très encombrant, peu flexible, et d'un coût de revient élevé.

On connait par JP 08090264 un dispositif d'application à la molette d'un bord de pavillon sur un côté de caisse, mais il ne s'agit pas d'une mise en géométrie.

C'est par conséquent le but de la présente invention d'offrir un procédé permettant l'accostage du pavillon sur le côté de caisse avec une précision donnée, et plus généralement un procédé permettant la mise en géométrie d'un pavillon et d'un côté de caisse dans une configuration souhaitée, de manipulation aisée, d'encombrement et de coût de revient réduits.

### EXPOSÉ DE L'INVENTION

Le but précédemment énoncé est atteint par un procédé conforme à la revendication 1 annexée.

En d'autres termes, l'effort est appliqué sur une zone réduite sur le pavillon et non le long de toute la zone de raccord simultanément comme dans l'état de la technique.

Le dispositif de mise en oeuvre du procédé est alors de conception simple et légère, sa manipulation en est donc facilité et son coût de revient est réduit.

Les inventeurs ont en effet constaté que pour ajuster la position relative d'un pavillon et d'un côté de caisse, il suffisait d'exercer un effort donné sur le pavillon le long de la zone de raccord pour atteindre une précision suffisante. Aucune prise de référence sur le côté de caisse n'est alors nécessaire pour fixer cette position relative.

Dans un mode de réalisation particulièrement avantageux, le dispositif comporte deux éléments aptes à exercer un effort, un élément amont et un élément aval dans la direction de déplacement des éléments. Ainsi, l'effort exercé par le dispositif sur une zone de la pièce est appliqué plus longtemps, ce qui permet d'augmenter la vitesse de déplacement du dispositif.

Les éléments aval et amont sont, par exemple, montés sur un palonnier, ce qui permet d'auto-équilibrer l'effort qu'ils appliquent.

Le dispositif de mise en géométrie, tel que décrit ci-dessus, peut être associé à un dispositif de soudage ou brasage, qui soude le pavillon sur le côté de caisse juste après que le dispositif de mise en géométrie ait positionné correctement le pavillon et le côté de caisse l'un par rapport à l'autre.

De manière particulièrement avantageuse, le dispositif comporte deux éléments aptes à appliquer un effort sur le pavillon, lesdits éléments étant décalés dans une direction de déplacement le long de la zone de raccord. Les deux éléments sont avantageusement montés de manière à pouvoir basculer l'un par rapport à l'autre autour d'un axe orthogonal à la zone de raccord, et assurant une répartition des efforts sur le pavillon. Des moyens pour limiter ou annuler le basculement des deux éléments aptes à exercer un effort peuvent être prévus.

Dans un exemple de réalisation, le ou les éléments aptes à exercer un effort comportent une molette. La ou les molettes peuvent avoir un profil cylindrique régulier ou un profil de tronc de cône, la plus petite base étant orientée vers la zone de raccord. Dans un mode de réalisation avantageux, la ou les molettes peuvent avoir un profil elliptique, dont le grand axe est confondu avec l'axe de rotation de la molette.

Dans un autre exemple de réalisation, le ou les éléments d'application d'effort sont formés par des patins destinés à glisser sur la deuxième pièce.

Le dispositif de mise en oeuvre du procédé de l'invention comporte également un élément d'interposition destiné à être placé entre le ou les éléments d'application d'effort et le pavillon, de manière à limiter le marquage du pavillon. L'élément d'interposition est une plaque préférentiellement par des moyens de suspension permettant un ajustement de la forme de ladite plaque à la forme du pavillon.

La présente invention a également pour objet un procédé de montage d'un pavillon sur un côté de caisse d'un véhicule automobile dans une position donnée, comportant un procédé de mise en géométrie selon la présente invention à deux éléments d'application d' effort et une étape de brasage associée au déplacement à la mise en géométrie, le brasage étant effectué entre les deux éléments d'application d'effort destinés à venir en contact avec la deuxième pièce. Ce procédé permet un montage rapide du pavillon sur le côté de caisse.

### BRÈVE DESCRIPTION DES DESSINS

La présente invention sera mieux comprise à l'aide de la description qui va suivre et des dessins annexés, sur lesquels :
- la figure 1 est une représentation schématique d'un détail vu de côté d'un exemple de réalisation d'un dispositif selon l'invention,
- la figure 2 est une représentation schématique du dispositif de la figure 1 vu de face.

### EXPOSÉ DÉTAILLÉ DE MODES DE RÉALISATION PARTICULIERS

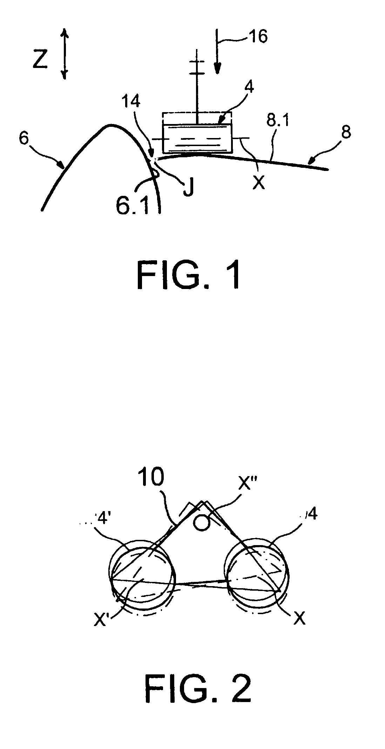

Sur les figures 1 et 2, on peut voir un exemple de réalisation du dispositif de mise en géométrie selon la présente invention comportant deux molettes destinées à venir en contact avec le pavillon.

Sur la figure 1, on peut voir en vue de côté le dispositif selon l'invention comportant deux molettes 4, 4' en appui sur une surface supérieure 8.1 d'un pavillon 8 de véhicule automobile et un côté de caisse 6 sur lequel est destiné à être fixé le pavillon 8 dans une position donnée. Le pavillon 8 et le côté de caisse 6 se raccordent le long d'une zone de raccord 14 sensiblement rectiligne.

Les molettes 4, 4' sont destinées à rouler le long de cette zone de raccord 14 et à exercer un effort sur le pavillon pour le déformer élastiquement et le rapprocher selon la flèche 16 du côté de caisse.

Il a été observé de manière particulièrement surprenante que la configuration d'accostage entre le pavillon et le côté de caisse, permettait de ne pas utiliser de moyen lourd et complexe appliquant une poussée sur toute la surface du pavillon pour effectuer une mise en géométrie satisfaisante du pavillon et du côté de caisse.

Ainsi, en appliquant un effort ponctuel donné sur le pavillon dans un sens de rapprochement de l'extrémité du pavillon 8 et du côté 6.1 du côté de caisse 6, une mise en géométrie de précision suffisante était obtenue.

Les molettes 4, 4' peuvent être, comme dans l'exemple représenté, en forme de cylindre régulier d'axe X, X' parallèle.

De manière avantageuse, les molettes sont de grand rayon afin d'éviter les risques de marquage du pavillon.

La molette a par exemple un diamètre compris entre 60 mm et 70 mm, le pavillon ayant par exemple une longueur de 2 m.

On pourrait également prévoir des molettes en forme de tronc de cône, de petite base orientée du côté du côté de caisse.

Le tronc de cône serait avantageusement de grand rayon, ce qui permet d'éviter que la bande de roulement des molettes soit absolument parallèle à la surface du pavillon. Le grand rayon permet d'avoir un appui ponctuel et de s'affranchir du galbe du pavillon. Il n'est alors pas nécessaire d'avoir une molette différente pour chaque type de pavillon.

Dans l'exemple représenté et visible sur la figure 2, les molettes sont avantageusement montées sur un palonnier 10, ainsi elles basculent l'une par rapport à l'autre autour d'un axe X", permettant de faciliter une répartition des efforts et la trajectoire du robot. En effet, celui-ci est mieux guidé avec deux appuis sur le pavillon de caisse.

On peut prévoir de bloquer le basculement entre les molettes ou de limiter celui-ci au moyen d'une butée réglable.

Ainsi pour effectuer une mise en géométrie, il suffis :
- de rapprocher latéralement le côté de caisse 6 et le pavillon 8,
- de disposer les molettes 4, 4' du dispositif de mise en géométrie selon la présente invention en contact avec la face supérieure 8.1 du pavillon 8 et de les déplacer sur le pavillon 8, pour effectuer simplement une mise en géométrie du pavillon et du côté de caisse avec la précision souhaitée.

Cette mise en géométrie est suivie par une solidarisation du pavillon sur le côté de caisse. De manière avantageuse, celle-ci est réalisée par brasage.

On peut prévoir un robot portant à la fois le dispositif de mise en géométrie et un outil de brasage (non représenté).

Dans cet exemple de réalisation à deux molettes, l'outil de brasage est avantageusement disposé entre la molette 4 et la molette 4' dans le sens de déplacement du dispositif de mise en géométrie. Ainsi la molette 4 positionne le pavillon par rapport à la caisse et la molette 4' maintient le pavillon dans sa position par rapport au côté de caisse après le brasage, ce qui permet de limiter la levée du pavillon pendant le brasage.

Par exemple, les axes des molettes sont distants de 150 mm, cette distance étant choisie notamment en fonction de la vitesse de brasage et des efforts à appliquer.

Ainsi, les molettes 4, 4' exercent un effort sur le pavillon 8 et le positionnent par rapport au côté de caisse 6.

Une mise en géométrie et un brasage rapides du pavillon et du côté de caisse peuvent alors être effectués, par exemple de l'ordre de 6 m par minute. En effet, la mise en oeuvre de deux éléments décalés dans la direction de déplacement pour appliquer un effort permet d'exercer un effort pendant une période plus longue, qu'avec un seul élément, l'élément aval étant relayé par l'élément amont. Ainsi, la période pendant laquelle un effort est appliqué est égale à deux fois celle obtenue à avec un seul élément. Le cordon de brasage a alors le temps de se solidifier et de réaliser un maintien définitif en position du pavillon et du côté de caisse.

Il a été décrit un dispositif de mise en géométrie à deux molettes juxtaposées, mais un dispositif comportant une seule molette ne sort pas du cadre de la présente invention. Dans ce cas, l'outil de brasage est décalé axialement en amont du dispositif de mise en géométrie dans le sens de déplacement du robot, ainsi dès que le pavillon et le côté de caisse sont dans la position souhaitée, l'outil de brasage effectue la solidarisation du pavillon sur le côté de caisse et, donc fixe la position relative entre ces deux éléments.

L'outil de brasage peut être décalé axialement de plusieurs centimètres par rapport aux molettes, par exemple 5 cm.

Dans ce cas, la solidarisation du pavillon et du côté de caisse peut être plus longue, puisque le pavillon n'est maintenu en position que par une seule molette, il est alors préférable d'attendre la solidification du cordon de soudure.

Par ailleurs, un jeu J entre le pavillon et le côté de caisse résulte de cette mise en géométrie, cependant ce jeu J est comblé par le cordon de brasage.

On peut également prévoir que le dispositif de mise en géométrie et l'outil de brasage soient portés par deux robots mécaniquement indépendants dont les déplacements sont synchronisés, afin d'effectuer le brasage rapidement après la mise en position du pavillon et du côté de caisse.

Ainsi, au fur et à mesure que les molettes 4, 4' avancent, le brasage entre le pavillon 8 et le côté de caisse 6 est effectué.

Par ailleurs, il est prévu d'interposer entre les bandes de roulement des molettes 4, 4' et le pavillon 8, un élément d'interposition (non représenté) destiné à éviter le marquage de la surface extérieure 8.1 du pavillon 8 par la bande de roulement des molettes 4, 4'. En effet, la contrainte appliquée par les molettes 4, 4' au pavillon 8, afin de le positionner correctement par rapport au côté de caisse, peut provoquer des marques sur celui-ci. Nous rappelons, à cet égard, que la surface extérieure 8.1 du pavillon 8 est destinée à être visible, il faut donc soigner particulièrement l'aspect visuel de cette surface extérieure. Par ailleurs, Le risque de marquage est d'autant plus important que le pavillon a une forme galbée.

Il est donc prévu de disposer une plaque entre les molettes 4, 4' et le pavillon 8. Par exemple, cette plaque peut avoir une épaisseur de 2 mm et une largeur de 10 cm, la longueur de cette plaque s'étendant dans la direction de déplacement des molettes, la largeur correspondant à la dimension transversale de cette plaque étant définie suivant la taille de la molette.

La plaque est par exemple en tôle d'acier, du type tôle bleue de 1,5 mm d'épaisseur ou en aluminium de 2 mm d'épaisseur en fonction de l'effort ou de la résistance du pavillon, mais aussi de la vitesse de brasage.

La tôle est posée sur toute la longueur du véhicule le long de la zone de raccord et est montée souple, par exemple au moyen de cylindres blocs ou de ressorts, le long de la direction Z pour qu'elle puisse venir en contact avec le pavillon et qu'elle puisse l'appuyer sur le côté de caisse au passage de la molette. La tôle peut alors ajuster sa forme à la courbe du pavillon.

Le matériau et les dimensions, notamment l'épaisseur de la plaque d'interposition, sont déterminés en fonction du type de molette et du matériau utilisé pour les molettes, et en fonction de la résistance du pavillon, de son épaisseur et de sa forme.

Par ailleurs, la tôle joue également le rôle de pompe thermique et répartit les efforts sur le pavillon lors du passage de la molette pour ne pas déformer le pavillon, en effet les efforts des molettes peuvent atteindre 30 kg. Il peut être prévu que l'effort soit réglable au cours de la trajectoire du robot entre le début et la fin du pavillon.

Le montage souple de la tôle permet à celle-ci d'ajuster sa forme au galbe du pavillon.

De manière avantageuse, le galbe du pavillon peut être maintenu par ventouses.

Le matériau des molettes peut également être choisi pour réduire les risques de marquage.

Dans un autre mode de réalisation, les éléments destinés à venir en contact avec le pavillon pour le déformer peuvent également être des surfaces planes, par exemple du type patin, destinées à glisser sur ces deux éléments à mettre en position.

Ces deux surfaces planes peuvent être portées par un palonnier, par analogie au dispositif de la figure 1.

La plaque d'interposition décrite ci-dessus est également utilisable pour le dispositif comportant des surfaces planes.

Des dispositifs de mise en géométrie comportant une molette 4 et un patin 4' ou inversement, ne sort pas du cadre de la présente invention.

Le dispositif de mise en géométrie selon la présente invention est donc de conception très simple, d'une grande maniabilité et de coût de revient réduit.

## Revendications

1. Procédé de mise en géométrie d'un pavillon (8) et d'un côté de caisse (6) pour la fabrication d'un véhicule automobile, le pavillon (8) et le côté de caisse (6) étant destinés à venir se raccorder le long d'une ligne, dite zone de raccord (14), comportant les étapes :
- mise en place d'une plaque d'interposition entre le ou les éléments (4, 4') d'application d'effort et le pavillon (8), de manière à limiter le marquage du pavillon (8),
- application uniquement sur le pavillon (8) d'un effort de rapprochement du pavillon (8) et du côté de caisse (6) à proximité de la zone de raccord (14), ledit effort étant sensiblement orthogonal au pavillon (8), l'application de l'effort étant mobile le long de la zone de raccord (14).

2. Procédé de mise en géométrie selon la revendication 1, utilisant deux éléments (4, 4') aptes à appliquer un effort sur le pavillon (6), lesdits éléments (4, 4') étant décalés dans une direction de déplacement le long de la zone de raccord.

3. de mise en géométrie selon la revendication précédente, selon lequel les deux éléments (4, 4') sont montés de manière à pouvoir basculer l'un par rapport à l'autre autour d'un axe (X") orthogonal à la zone de raccord.

4. Procédé de mise en géométrie selon la revendication précédente, selon lequel on limite ou annule le basculement des deux éléments (4, 4') aptes à exercer un effort.

5. Procédé de mise en géométrie selon l'une des revendications 1 à 4, selon lequel le ou les éléments (4, 4') aptes à exercer un effort comportent une molette.

6. Procédé de mise en géométrie selon la revendication 5, selon lequel la ou les molettes (4, 4') ont un profil cylindrique régulier.

7. Procédé de mise en géométrie selon la revendication 5, selon lequel la molette ou les molettes ont un profil de tronc de cône, la plus petite base étant orientée vers la zone de raccord.

8. Procédé de mise en géométrie selon l'une des revendications 1 à 4, selon lequel le ou les éléments d'application d'effort sont formés par des patins destinés à glisser sur la deuxième pièce.

9. Procédé de mise en géométrie selon l'une des revendications 1 à 8, selon lequel la plaque d'interposition est supportée par des moyens de suspension permettant un ajustement de la forme de ladite plaque à la forme du pavillon (8).

10. Procédé de montage d'un pavillon sur un côté de caisse d'un véhicule automobile dans une position donnée, comportant un procédé de mise en géométrie selon l'une des revendications 2 à 9 et une étape de brasage associée à la mise en géométrie, le brasage étant effectué entre les deux éléments (4, 4') d'application d'effort destinés à venir en contact avec la deuxième pièce.

## Claims

1. Method for setting the geometry of a roof (8) and a body side (6) for the construction of a motor vehicle, the roof (8) and the body side (6) being intended to be joined along a line, called joining area (14), comprising the following steps:
- positioning of an interposition plate between the element(s) (4, 4') applying force and the roof (8), so as to limit the marking of the roof (8),
- application, only on the roof (8), of a force bringing the roof (8) and the body side (6) into proximity with the joining area (14), said force being substantially orthogonal to the roof (8), the application of the force being mobile along the joining area (14).

2. Geometry setting method according to Claim 1, using two elements (4, 4') capable of applying a force on the roof (6), said elements (4, 4') being offset in a direction of displacement along the joining area.

3. Geometry setting method according to the preceding claim, whereby the two elements (4, 4') are mounted so as to be able to tilt relative to one another about an axis (X") orthogonal to the joining area.

4. Geometry setting method according to the preceding claim, whereby the tilting of the two elements (4, 4') capable of exerting a force is limited or cancelled.

5. Geometry setting method according to one of Claims 1 to 4, whereby the element (s) (4, 4') capable of exerting a force comprise a roller wheel.

6. Geometry setting method according to Claim 5, whereby the roller wheel(s) (4, 4') has/have a regular cylindrical profile.

7. Geometry setting method according to Claim 5, whereby the wheel or roller wheel(s) has/have a truncated cone profile, the smaller base being oriented towards the joining area.

8. Geometry setting method according to one of Claims 1 to 4, whereby the elements applying force are formed by skids intended to slide on the second piece.

9. Geometry setting method according to one of Claims 1 to 8, whereby the interposition plate is supported by suspension means allowing for an adjustment of the form of said plate to the form of the roof (8).

10. Method for mounting a roof on a body side of a motor vehicle in a given position, comprising a geometry setting method according to one of Claims 2 to 9 and a hard soldering step associated with the geometry setting, the hard soldering being performed between the two elements (4, 4') applying force that are intended to come into contact with the second piece.

## Patentansprüche

1. Verfahren zur geometrischen Anordnung eines Verdecks (8) und einer Karosserieseite (6) zur Herstellung eines Kraftfahrzeugs, wobei das Verdeck (8) und die Karosserieseite (6) dazu bestimmt sind, entlang einer Linie, Anschlusszone (14) genannt, aneinander anzuschließen, das die folgenden Schritte aufweist:
- Einsetzen einer Einfügungsplatte zwischen dem oder den Elementen (4, 4') zur Kraftanwendung und dem Verdeck (8), um die Hinterlassung von Spuren auf dem Verdeck (8) zu begrenzen,
- Anwendung nur auf das Verdeck (8) einer Kraft zur Annäherung des Verdecks (8) und der Karosserieseite (6) in der Nähe der Anschlusszone (14), wobei die Kraft im Wesentlichen orthogonal zum Verdeck (8) ist, wobei die Anwendung der Kraft entlang der Anschlusszone (14) beweglich ist.

2. Verfahren zur geometrischen Anordnung nach Anspruch 1, das zwei Elemente (4, 4') verwendet, die eine Kraft auf das Verdeck (6) anwenden können, wobei die Elemente (4, 4') in einer Verschieberichtung entlang der Anschlusszone versetzt sind.

3. Verfahren zur geometrischen Anordnung nach dem vorhergehenden Anspruch, gemäß dem die zwei Elemente (4, 4') so montiert werden, dass sie zueinander um eine Achse (X") orthogonal zur Anschlusszone kippen können.

4. Verfahren zur geometrischen Anordnung nach dem vorhergehenden Anspruch, gemäß dem das Kippen der zwei Elemente (4, 4'), die eine Kraft ausüben können, begrenzt oder unterdrückt wird.

5. Verfahren zur geometrischen Anordnung nach einem der Ansprüche 1 bis 4, gemäß dem das oder die Elemente (4, 4'), die eine Kraft ausüben können, eine Rolle aufweisen.

6. Verfahren zur geometrischen Anordnung nach Anspruch 5, gemäß dem die Rolle oder die Rollen (4, 4') ein gleichmäßiges zylindrisches Profil haben.

7. Verfahren zur geometrischen Anordnung nach Anspruch 5, gemäß dem die Rolle oder die Rollen ein Kegelstumpfprofil haben, wobei die kleinste Basis zur Anschlusszone gerichtet ist.

8. Verfahren zur geometrischen Anordnung nach einem der Ansprüche 1 bis 4, gemäß dem das oder die Elemente zur Kraftanwendung von Gleitstücken geformt werden, die dazu bestimmt sind, auf dem zweiten Bauteil zu gleiten.

9. Verfahren zur geometrischen Anordnung nach einem der Ansprüche 1 bis 8, gemäß dem die Einfügungsplatte von Aufhängeeinrichtungen gehalten wird, die eine Anpassung der Form der Platte an die Form des Verdecks (8) erlauben.

10. Verfahren zur Montage eines Verdecks auf eine Karosserieseite eines Kraftfahrzeugs in einer gegebenen Stellung, das ein Verfahren zur geometrischen Anordnung nach einem der Ansprüche 2 bis 9 und einen der geometrischen Anordnung zugeordneten Lötschritt aufweist, wobei das Löten zwischen den zwei Elementen (4, 4') zur Kraftanwendung erfolgt, die dazu bestimmt sind, mit dem zweiten Bauteil in Kontakt zu kommen.
